# EUROPÄISCHE PATENTSCHRIFT

(11) **EP 2 551 533 B1**
(45) Veröffentlichungstag und Bekanntmachung des Hinweises auf die Patenterteilung: **29.11.2017**
(21) Anmeldenummer: 12171912.4
(22) Anmeldetag: 14.06.2012
(51) Int. Cl.: F16B 9/02, G02B 7/00, F16C 11/10, F16M 11/12, F16B 43/02, G01V 8/00, G01D 11/30

(54) **SENSOR**
SENSOR
CAPTEUR

(30) Priorität: 28.07.2011 DE 202011050832 U
(43) Veröffentlichungstag der Anmeldung: 30.01.2013
(73) Patentinhaber: Leuze electronic GmbH + Co KG, 73277 Owen/Teck (DE)
(72) Erfinder: Schweikert, Uwe, 73230 Kirchheim/Teck (DE); Bortz, Jörg, 72805 Lichtenstein (DE); Bunz, Oliver, 72639 Neuffen (DE)
(74) Vertreter: Ruckh, Rainer Gerhard

(56) Entgegenhaltungen:
- DE-A1- 19 651 341
- DE-U- 1 982 151
- JP-A- 10 318 240
- US-A- 5 198 664
- US-A1- 2002 116 789
- US-A1- 2004 101 384
- US-A1- 2008 315 479
- US-B1- 6 364 564

## Beschreibung

### Die Erfindung betrifft einen Sensor.

Derartige Sensoren dienen generell zur Erfassung von Objekten in einem bestimmten Überwachungsbereich. Beispiele für derartige Sensoren sind optische Sensoren wie Reflexionslichtschranken, Lichttaster, Lichtschranken und dergleichen. Generell weisen diese Sensoren wenigstens ein Gehäuse auf, in welchem die entsprechenden Sensorkomponenten integriert sind. Optische Sensoren weisen als Sensorkomponenten typisch wenigstens einen Lichtstrahlen emittierenden Sender und einen Lichtstrahlen empfangenden Empfänger auf.

Bei einem Einsatz des Sensors in industriellen Umgebungen muss dieser Sensor vor Inbetriebnahme an einer Anlage, einer Maschine oder dergleichen befestigt und dabei in geeigneter Weise justiert, das heißt ausgerichtet werden, damit der Sensor den gewünschten Bereich überwachen kann.

Zur Befestigung des Sensors an einem Einsatzort ist dabei wenigstens ein Befestigungselement vorgesehen, das typischerweise von einem Befestigungswinkel gebildet sein kann. Zur Ausrichtung des Sensors kann zusätzlich eine Justageplatte vorgesehen werden, die beispielsweise durch das Vorsehen von Langlöchern eine Einstellmöglichkeit des Sensors liefert. Nachteilig hierbei ist, dass bei derartigen Ausrichthilfen der Sensor nicht in mehreren Raumrichtungen gleichzeitig einstellbar ist. Vielmehr muss zur Ausrichtung des Sensors in jeder Raumrichtung ein separater Ausrichtvorgang durchgeführt werden. Bei jedem dieser Justagevorgänge muss nach erfolgter Ausrichtung ein Befestigungselement betätigt werden, beispielsweise Schrauben in Langlöchern der Justageplatte festgezogen werden. Der Justagevorgang wird dadurch unerwünscht umständlich und zeitaufwändig.

Ein Sensor gemäß dem Oberbegriff des Anspruchs 1 ist aus der US 5,198,664 A bekannt. Dieser Sensor ist als photoelektrischer Sensor mit einem zylindrischen Gehäuse, das ein Außengewinde aufweist, ausgebildet. Auf dieses Außengewinde kann eine Endkappe aufgeschraubt werden. Zur Befestigung des Sensors ist eine Montageklammer vorgesehen, die aus zwei miteinander verschraubbaren Montageteilen besteht. Jedes Montageteil weist eine halbkreisförmige Ausnehmung auf. Die Montageteile werden so um die Endkappe gelegt, dass diese Endkappe an den halbkreisförmigen Ausnehmungen liegt. Bevor die Montageteile durch Schrauben gegeneinander gepresst werden und so die Endkappe fixieren, kann die Endkappe mit dem Sensor in der Montageklammer liegend verschwenkt werden.

Die US 6,364,564 betrifft eine Befestigungsvorrichtung bei welcher zwei separate Einheiten vorgesehen sind, um ein erstes Bauteil gegenüber einem zweiten Bauteil in zwei Raumrichtungen verstellen zu können. Die erste Einheit weist ein kugelförmiges Teil auf, in dem ein Zapfen drehbar gelagert ist. An dem Zapfen befindet sich ein Vorsprung mit einer sphärischen Oberfläche. Diese ist Bestandteil eines Schwenksystems, das weiterhin eine Mutter mit einer konkaven Fläche aufweist. Zwischen dem Vorsprung und der Mutter sind zwei Ringe mit konkaven Flächen vorgesehen, zwischen welchen ein Arm einer Befestigung für das Bauteil angeordnet ist.

Der Erfindung liegt die Aufgabe zugrunde, eine verbesserte Ausrichthilfe für einen Sensor der eingangs genannten Art bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß wird somit eine verbesserte Ausrichthilfe für einen Sensor dahingehend geschaffen, dass zur Ausrichtung des Sensor dessen zylindrischer Abschnitt eine Taumelbewegung durchführen kann, so dass damit in zwei Raumrichtungen gleichzeitig die korrekte Ausrichtung des Sensors eingestellt werden kann.

Entsprechend der Geometrie der Taumelbewegung kann die Ausrichtung des Sensors in einer Ebene in Polarkoordinaten direkt vorgegeben werden. Die erfindungsgemäße Ausrichtung kann von einer Bedienperson schnell, einfach und genau durchgeführt werden.

Der konstruktive Aufwand zur Realisierung der erfindungsgemäßen Ausrichthilfe kann dabei gering gehalten werden.

Zur Ausbildung dieser Ausrichthilfe dienen im Wesentlichen die balligen Kontermuttern auf dem zylindrischen Abschnitt, wobei zwischen diesen Kontermuttern das Befestigungselement und die Ausgleichsscheibe, die als separate Einheiten mit Spiel auf dem zylindrischen Abschnitt gelagert sind, angeordnet sind.

Hierzu weisen das Befestigungselement und die Ausgleichsscheibe jeweils ein kreisförmiges Durchgangsloch auf. Der zylindrische Abschnitt ist durch die Durchgangslöcher geführt, um das Befestigungselement und die Ausgleichsscheibe auf dem zylindrischen Abschnitt zu lagern.

Während des Ausrichtvorgangs sind die Kontermuttern noch nicht fest angezogen, so dass der zylindrische Abschnitt relativ zum Befestigungselement eine Taumelbewegung durchführen kann. Ist die gewünschte Ausrichtung erreicht, werden die Kontermuttern gegeneinander anzogen, so dass zwischen den Kontermuttern das Befestigungselement und die Ausgleichsscheibe fest eingeklemmt sind und so die gewünschte Einstellung des Sensors dauerhaft erhalten bleibt.

Wesentlich hierbei ist, dass jede Kontermutter eine konvex gekrümmte Außenmantelfläche aufweist, wobei beispielsweise die gekrümmten Außenmantelflächen einen bestimmten Krümmungsradius aufweisen, eine Kugelfläche oder eine Asphäre bilden.

Bevorzugt ist die Krümmung der Außenmantelfläche jeder Kontermutter über deren gesamten Umfang konstant.

Weiter ist wesentlich, dass die Ausgleichsscheibe ein gegenüber dem Befestigungselement freibewegliches Teil bildet.

Bei einer Einstellung einer vorgegebenen Neigung des zylindrischen Abschnitts relativ zum Befestigungselement wird im allgemeinen das Befestigungselement durch den zylindrischen Abschnitt gegen die Ausgleichsscheibe verschoben. Je nach eingestellter Neigung des zylindrischen Abschnitts liegt ein bestimmter Abschnitt der gekrümmten Außenmantelfläche einer ersten Kontermutter am Befestigungselement und ein bestimmter Abschnitt der gekrümmten Außenmantelfläche der zweiten Kontermutter an der Ausgleichsscheibe an. Durch diese gekrümmten Außenmantelflächen ist gewährleistet, dass die eingestellte Neigung des zylindrischen Abschnitts zum Befestigungselement bei Anziehen der Kontermutter exakt erhalten bleibt.

Die so ausgebildete Ausrichthilfe ist damit einfach handhabbar und gewährleistet ein reproduzierbares, exaktes Ausrichten des Sensors.

Um ein Anziehen der Kontermutter gegeneinander zu bewerkstelligen, welches zur Fixierung des zylindrischen Abschnitts am Befestigungselement notwendig ist, weist wenigstens eine Kontermutter ein mit dem Befestigungsgewinde in Eingriff stehendes Innengewinde auf.

Besonders vorteilhaft weisen beide Kontermuttern ein mit dem Befestigungsgewinde im Eingriff stehendes Innengewinde auf.

Damit können beide Kontermuttern unabhängig voneinander entlang des zylindrischen Abschnitts bewegt werden.

Prinzipiell kann auch eine Kontermutter fest mit dem zylindrischen Abschnitt verbunden sein.

Besonders vorteilhaft ist der Winkelbereich, innerhalb dessen die Neigungsverstellung des zylindrischen Abschnitts durchführbar ist, vorgebbar durch die Dimensionierung der Kontermutter, der Dicke des Befestigungselements und der Ausgleichsscheibe und der Größe deren Durchgangslochs.

Gemäß einer ersten Ausgestaltung der Erfindung weist das Gehäuse des Sensors die Form einer zylindrischen Rundhülse auf. Diese Rundhülse bildet den zylindrischen Abschnitt, an welchem das Befestigungsgewinde angeordnet ist.

Alternativ weist der Sensor ein kubisches Gehäuse auf, an welchem ein Gewindebolzen befestigt ist, welcher den zylindrischen Abschnitt bildet.

Der erfindungsgemäße Sensor kann allgemein ein optischer Sensor oder ein induktiver Sensor oder ein Ultraschallsensor sein.

Die die Erfindung wird im Folgenden anhand der Zeichnungen erläutert. Es zeigen:
- Figur 1:: Erstes Ausführungsbeispiel des erfindungsgemäßen Sensors mit einer Ausrichthilfe
- Figur 2:: Zweites Ausführungsbeispiel des erfindungsgemäßen Sensors mit einer Ausrichthilfe

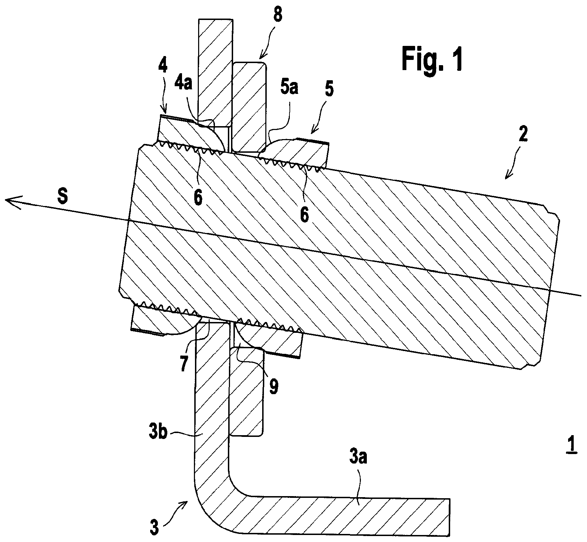

Figur 1 zeigt einen Sensor 1 mit einem Gehäuse 2 in Form einer Rundhülse, das heißt eines hohlzylindrischen Körpers. Der Sensor 1 kann prinzipiell als induktiver Sensor, Ultraschallsensor oder dergleichen ausgebildet sein. Im vorliegenden Fall ist der Sensor 1 als optischer Sensor ausgebildet, spezifisch als Lichttaster. Bei einem derartigen Lichttaster sind als Sensorkomponenten ein Lichtstrahlen emittierender Sender und ein Lichtstrahlen empfangender Empfänger zur Erfassung von Objekten in einem Überwachungsbereich vorgesehen. Figur 1 zeigt die Strahlachse S der Lichtstrahlen, die über die vordere Stirnseite des Gehäuses 2 in den Überwachungsbereich geführt werden.

Der Sensor 1 wird allgemein in industriellen Umgebungen eingesetzt, beispielsweise an einer Maschine um dort angeordnete oder geförderte Objekte zu erfassen. Zur Befestigung des Sensors 1 an der Maschine ist ein Befestigungselement in Form eines Befestigungswinkels 3 vorgesehen, wobei der Befestigungswinkel 3 in bekannter Weise mit einem in horizontaler Richtung verlaufenden unteren Schenkel 3a an einer Unterlage, die von einem Teil der Maschine gebildet ist, befestigt wird. Der Befestigungswinkel 3 besteht typischerweise aus einem metallischen Werkstoff.

Der Sensor 1 kann mittels einer Ausrichthilfe in unterschiedlichen Neigungsstellungen an dem Befestigungswinkel 3 ausgerichtet und dort fixiert werden. Als Bestandteil der Ausrichthilfe sind zwei Kontermuttern 4, 5 vorgesehen, die auf einem Befestigungsgewinde 6 an der Mantelfläche des Gehäuses 2, welche einen zylindrischen Abschnitt bildet, angeordnet sind. Die Kontermuttern 4, 5 können aus Kunststoff oder einem metallischen Werkstoff bestehen. Im vorliegenden Fall weist das Befestigungsgewinde 6 für jede Kontermutter 4, 5 einen separaten Abschnitt auf. Alternativ kann ein durchgehendes Befestigungsgewinde 6 vorgesehen sein. Durch Betätigen der Kontermuttern 4, 5 können diese entlang des zylindrischen Abschnitts bewegt werden.

Der obere Schenkel 3b des Befestigungswinkels 3 weist ein kreisförmiges Durchgangsloch 7 auf, durch welches das Gehäuse 2 des Sensors 1 geführt ist. Der Durchmesser des Durchgangslochs 7 ist größer als der Außendurchmesser des Gehäuses 2, das heißt dessen zylindrischer Abschnitt liegt mit Spiel in dem Durchgangsloch 7 des oberen Schenkels 3b des Befestigungswinkels 3.

Als weiteres Element der Ausrichthilfe ist eine Ausgleichsscheibe 8 vorgesehen, die ebenfalls ein kreisförmiges Durchgangsloch 9 aufweist, dessen Durchmesser größer ist als der Außendurchmesser des zylindrischen Abschnitts des Gehäuses 2. Die Ausgleichsscheibe 8 kann aus Kunststoff oder einem metallischen Werkstoff bestehen. Wie aus Figur 1 ersichtlich, ist der zylindrische Abschnitt des Gehäuses 2 durch die Durchgangslöcher 7, 9 des Befestigungswinkels 3 und der Ausgleichsscheibe 8 geführt. Der Befestigungswinkel 3 und die Ausgleichsscheibe 8 liegen dabei zwischen den Kontermuttern 4, 5. Die ebenen Seitenflächen des oberen Schenkels 3b und der Ausgleichsscheibe 8, die jeweils eine konstante Wanddicke aufweisen, liegen dabei dicht aneinander an.

Wie aus Figur 1 ersichtlich, sind auf dem Befestigungsgewinde 6 des zylindrischen Abschnitts zwei ballige Kontermuttern 4, 5 angeordnet, das heißt die Kontermuttern 4, 5 weisen jeweils eine konvex gekrümmte Außenmantelfläche 4a, 5a auf. Wesentlich ist, dass die gekrümmten Segmente der Außenmantelfläche 4a, 5a, wie in Figur 1 dargestellt, dem Befestigungswinkel 3 und der Ausgleichsscheibe 8 zugewandt sind, da diese gekrümmten Außenmantelflächen 4a, 5a, als Anlageflächen dienen, um den Befestigungswinkel 3 und die Ausgleichsscheibe 8 festzuklemmen, so dass diese Elemente zwischen den Kontermuttern 4, 5 fixiert sind. Im vorliegenden Fall weist jede Außenmantelfläche 4a, 5a in dem dem Befestigungswinkel 3 oder der Ausgleichsscheibe 8 zugewandten Abschnitt einen bestimmten Krümmungsradius auf, der über den Umfang der jeweiligen Kontermutter 4, 5 konstant ist. Generell können die Außenmantelflächen 4a, 5a in Form von Kugelflächen oder asphärischen Flächen ausgebildet sein.

Die Ausrichtung des Sensors 1 an dem Befestigungswinkel 3 wird im Folgenden anhand von Figur 1 erläutert.

In einem ersten Schritt wird der zylindrische Abschnitt des Gehäuses 2 des Sensors 1 durch die Durchgangslöcher 7, 9 des Befestigungswinkels 3 und der Ausgleichsscheibe 8 geführt. Dann werden die Kontermuttern 4, 5 auf das Befestigungsgewinde 6 so geschraubt, dass die Kontermuttern 4, 5 zwar leicht an dem Befestigungsgewinde 6 beziehungsweise an der Ausgleichsscheibe 8 anliegen, diese aber noch nicht festklemmen.

In diesem Zustand kann der Sensor 1 mit einer Strahlachse S so ausgerichtet werden, dass die Strahlachse S korrekt im Überwachungsbereich verläuft. Hierzu kann eine Bedienperson den Sensor 1 prüfen und zur Ausrichtung des Sensors 1 eine Taumelbewegung des zylindrischen Abschnitts durchführen, wodurch die Neigung in dem zylindrischen Abschnitt in zwei Raumrichtungen eingestellt werden kann. Bei der Taumelbewegung kann sich der zylindrische Abschnitt in dem Durchgangsloch 7 des an der Maschine befestigten Befestigungswinkels 3 bewegen, dass die Längsachse des Sensors 1, das heißt dessen Strahlachse S, relativ zur Ebene des oberen Schenkels 3b des Befestigungswinkels 3 eingestellt werden kann. Bei Einstellung einer Neigung des zylindrischen Abschnitts im Durchgangsloch 7 des Befestigungswinkels 3 führt die Ausgleichsscheibe 8 eine Ausgleichsbewegung durch. Dies ist aus Figur 1 ersichtlich. Dort ist der vordere Teil des Sensors 1 nach oben geneigt, wodurch der hintere Teil des Sensors 1 natürlich nach unten gerichtet ist und damit die Ausgleichsscheibe 8 mit nach unten zieht.

Diese Ausgleichsscheibe 8 beziehungsweise deren Ausgleichsbewegung ist notwendig, um den Sensor 1 in einer geeigneten Sollposition, beispielsweise in der in Figur 1 dargestellten Neigungsposition, fixieren zu können. Zur Fixierung in der gewünschten Neigungsposition des Sensors 1 werden die Kontermuttern 4, 5 fest angezogen, so dass die Kontermutter 4 gegen den Befestigungswinkel 3 gepresst ist und die Kontermutter 5 gegen die Ausgleichsscheibe 8 gepresst ist. Durch die konvexe Ausbildung der Außenmantelfläche 4a, 5a der Kontermuttern 4, 5, die am Befestigungswinkel 3 beziehungsweise der Ausgleichsscheibe 8 anliegen, und die versetzte Anordnung der Ausgleichsscheibe 8 zum Befestigungswinkel 3 ist gewährleistet, dass bei einem Anziehen der Kontermuttern 4, 5 die Neigungswinkeleinstellung des Sensors 1 erhalten bleibt, das heißt ein Zurückrutschen des Sensors 1 in die horizontale Ausgangsstellung vermieden wird.

Mit der so gestalteten Ausrichthilfe kann ein exaktes Ausrichten der Strahlachse S des Sensors 1 erfolgen. Auch können mit der Ausrichthilfe Schielfehler eines optischen Sensors kompensiert werden.

Durch eine geeignete Dimensionierung der Wanddicken des Befestigungswinkels 3 und der Ausgleichsscheibe 8, der Größen der Durchgangslöcher 7, 9 dieser Komponenten und durch Vorgabe der Krümmungen der Außenmantelfläche 4a, 5a der Kontermuttern 4, 5 kann der Winkelbereich, innerhalb dessen die Taumelbewegung des zylindrischen Abschnitts durchgeführt werden kann, vorgegeben werden.

Die Ausrichthilfe gemäß Figur 1 dient zur Justage eines optischen Sensors in Form eines Lichttasters, bei welchem alle Sensorkomponenten in einem Gehäuse 2 angeordnet sind. Generell kann die Ausrichthilfe auch zur Ausrichtung eines Sensors 1 mit zwei Gehäusen 2 verwendet werden. Beispielsweise kann ein solcher Sensor 1 von einer Lichtschranke mit einem Sendergehäuse, enthaltend einen Lichtstrahlen emittierenden Sender, und einem Empfängergehäuse, enthaltend einen Lichtstrahlen empfangenden Empfänger, gebildet sein. In diesem Fall ist es ausreichend, das Sendergehäuse mit der Ausrichthilfe auszurichten. Für das Empfängergehäuse muss keine Ausrichthilfe vorgesehen sein.

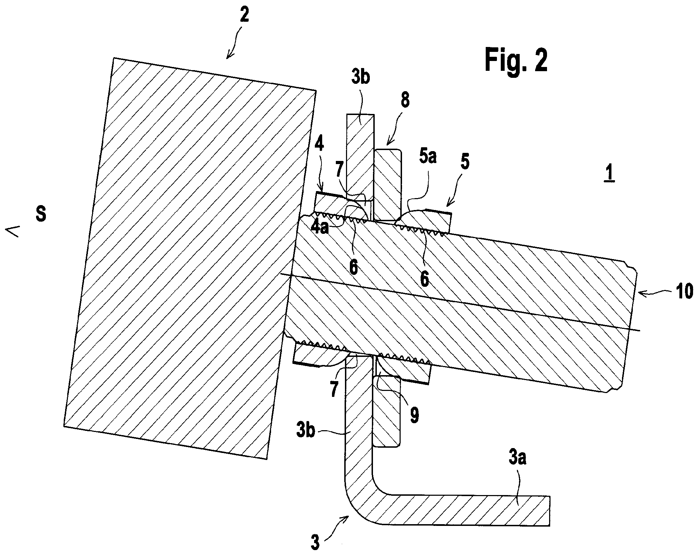

Figur 2 zeigt eine zweite Ausführungsform eines Sensors 1, beispielsweise eines als Lichttaster ausgebildeten optischen Sensors. In diesem Fall weist der Sensor 1 zur Aufnahme der Sensorkomponenten ein kubisches, das heißt quaderförmiges Gehäuse 2 auf. An diesem kubischen Gehäuse 2 ist ein zylindrischer Gewindebolzen 10 befestigt, der den zylindrischen Abschnitt bildet, an welchem das Befestigungsgewinde 6 angeordnet ist. Dieser zylindrische Abschnitt ist analog zur Ausführungsform gemäß Figur 1 in den Durchgangslöchern 7, 9 des Befestigungswinkels 3 und der Ausgleichsscheibe 8 gelagert. In weiterer Analogie sind der Befestigungswinkel 3 und die Ausgleichsscheibe 8 zwischen Kontermuttern 4, 5 mit gekrümmten Außenmantelflächen 4a, 5a gelagert. Damit ist die Ausrichthilfe gemäß Figur 2 mit den identischen Komponenten wie die Ausrichthilfe der Figur 1 ausgestattet, so dass die Justage des Sensors 1 der Figur 2 identisch wie bei der Ausführungsform gemäß Figur 1 erfolgen kann.

### Bezugszeichenliste

- (1): Sensor
- (2): Gehäuse
- (3): Befestigungswinkel
- (3a): unterer Schenkel
- (3b): oberer Schenkel
- (4): Kontermutter
- (4a): Außenmantelfläche
- (5): Kontermutter
- (5a): Außenmantelfläche
- (6): Befestigungsgewinde
- (7): Durchgangsloch
- (8): Ausgleichsscheibe
- (9): Durchgangsloch
- (10): Gewindebolzen

## Patentansprüche

1. Sensor (1) mit einem Sensorkomponenten aufnehmenden Gehäuse (2), einem an dem Gehäuse angeordneten zylindrischen Abschnitt mit einem Befestigungsgewinde (6), einem Befestigungselement (3) zur Befestigung des Sensors (1) an einem Einsatzort und einer Ausrichthilfe für den Sensor (1), **dadurch gekennzeichnet, dass** die Ausrichthilfe zwei ballige Kontermuttern aufweist, die auf dem Befestigungsgewinde (6) angebracht sind und eine Ausgleichsscheibe (8) aufweist, wobei diese und das Befestigungselement zwischen den Kontermuttern (4, 5) auf dem zylindrischen Abschnitt mit Spiel gelagert sind, indem das Befestigungselement und die Ausgleichsscheibe jeweils ein kreisförmiges Durchgangsloch (7, 9) aufweisen, dessen Durchmesser jeweils größer als der Außendurchmesser des zylindrischen Abschnitts ist, wobei jede Kontermutter (4, 5) eine konvex gekrümmte Außenmantelfläche (4a, 5a) aufweist, wobei die gekrümmten Segmente der Außenmantelflächen (4a, 5a) der Kontermuttern (4, 5) dem Befestigungselement und der Ausgleichsscheibe (8) zugewandt sind und an diesen anliegen und wobei wenigstens eine Kontermutter (4) ein mit dem Befestigungsgewinde (6) in Eingriff stehendes Innengewinde aufweist, dass die Ausgleichsscheibe (8) ein gegenüber dem Befestigungselement frei bewegliches Teil bildet, und dass eine Neigungsposition des zylindrischen Abschnitts zum Befestigungselement in zwei Raumrichtungen gleichzeitig einstellbar und durch Anziehen der Kontermuttern (4, 5) gegen das Befestigungselement und die Ausgleichsscheibe (8) fixierbar ist.

2. Sensor nach Anspruch 1, **dadurch gekennzeichnet, dass** die gekrümmten Außenmantelflächen (4a, 5a) einen bestimmten Krümmungsradius aufweisen und eine Kugelfläche oder eine Asphäre bilden.

3. Sensor nach Anspruch 2, **dadurch gekennzeichnet, dass** die Krümmung der Außenmantelfläche (4a, 5a) jeder Kontermutter (4, 5) über deren gesamten Umfang konstant ist.

4. Sensor nach einem der Ansprüche 1-3, **dadurch gekennzeichnet, dass** eine Kontermutter (4) fest mit dem zylindrischen Abschnitt verbunden ist.

5. Sensor nach einem der Ansprüche 1 - 3, **dadurch gekennzeichnet, dass** beide Kontermuttern (4, 5) ein mit dem Befestigungsgewinde (6) in Eingriff stehendes Innengewinde aufweisen.

6. Sensor nach einem der Ansprüche 1-5, **dadurch gekennzeichnet, dass** die Durchgangslöcher (7, 9) von jeweils in einer Ebene liegenden Segmenten des Befestigungselements oder der Ausgleichsscheibe (8) begrenzt sind, welche bei der Befestigung an dem zylindrischen Abschnitt dicht aneinander anliegen.

7. Sensor nach Anspruch 6, **dadurch gekennzeichnet, dass** der Winkelbereich, innerhalb dessen die Neigungsverstellung des zylindrischen Abschnitts durchführbar ist, durch die Dimensionierung der Kontermutter (4), der Dicke des Befestigungselements und der Ausgleichsscheibe (8) und der Größe deren Durchgangslochs (7) vorgebbar ist.

8. Sensor nach einem der Ansprüche 1 bis 7, **dadurch gekennzeichnet, dass** dessen Gehäuse (2) die Form einer zylindrischen Rundhülse aufweist, wobei diese Rundhülse den zylindrischen Abschnitt bildet, an welchem das Befestigungsgewinde (6) angeordnet ist.

9. Sensor nach einem der Ansprüche 1 bis 7, **dadurch gekennzeichnet, dass** dieser ein kubisches Gehäuse (2) aufweist, an welchem ein Gewindebolzen (10) befestigt ist, welcher den zylindrischen Abschnitt bildet.

10. Sensor nach einem der Ansprüche 1 bis 9, **dadurch gekennzeichnet, dass** der Sensor (1) ein optischer Sensor oder ein induktiver Sensor oder ein Ultraschallsensor ist.

## Claims

1. Sensor (1) with a housing (2) receiving sensor components, a cylindrical section, which is arranged at the housing, with a fastening thread (6), a fastening element (3) for fastening the sensor (1) at a place of use and an alignment aid for the sensor (1), **characterised in that** the alignment aid comprises two ball locknuts mounted on the fastening thread (6) and a compensating washer (8), wherein this and the fastening element are mounted between the locknuts (4, 5) on the cylindrical section with play **in that** the fastening element and the compensating washer each have a circular passage hole (7, 9) with a diameter greater than the outer diameter of the cylindrical section, wherein each locknut (4, 5) has a convexly curved outer circumferential surface (4a, 5a), wherein the curved segments of the outer circumferential surfaces (4a, 5a) of the locknuts (4, 5) face the fastening element and the compensating washer (8) and bear thereagainst and wherein at least one locknut (4) has an internal thread disposed in engagement with the fastening thread (6), that compensating washer (8) forms a part freely movable relative to the fastening element and that an inclined position of the cylindrical section with respect to the fastening element is settable in two spatial directions simultaneously and is fixable by tightening the locknuts (4, 5) against the fastening element and the compensating washer (8).

2. Sensor according to claim 1, **characterised in that** the curved outer circumferential surfaces (4a, 5a) have a defined radius of curvature and form a ball surface or an asphere.

3. Sensor according to claim 2, **characterised in that** the curvature of the outer circumferential surface (4a, 5a) of each locknut (4, 5) is constant over the entire circumference thereof.

4. Sensor according to any one of claims 1 to 3, **characterised in that** one locknut (4) is fixedly connected with the cylindrical section.

5. Sensor according to any one of claims 1 to 3, **characterised in that** the two locknuts (4, 5) have an internal thread disposed in engagement with the fastening thread (6).

6. Sensor according to any one of claims 1 to 5, **characterised in that** the passage holes (7, 9) are bounded by respective segments, which lie in a plane, of the fastening element or the compensating washer (8), which bear tightly against one another when fastened to the cylindrical section.

7. Sensor according to claim 6, **characterised in that** the angular range within which the inclined adjustment of the cylindrical section can be carried out is predeterminable by the dimensioning of the locknut (4), the thickness of the fastening element and the compensating washer (8) and the size of the passage hole (7) thereof.

8. Sensor according to any one of claims 1 to 7, **characterised in that** the housing (2) thereof has the form of a cylindrical round sleeve, wherein this round sleeve forms the cylindrical section at which the fastening thread is arranged.

9. Sensor according to any one of claims 1 to 7, **characterised in that** this has a cubic housing (2) to which a threaded pin (10) forming the cylindrical section is fastened.

10. Sensor according to any one of claims 1 to 9, **characterised in that** the sensor (1) is an optical sensor, an inductive sensor or an ultrasonic sensor.

## Revendications

1. Capteur (1) avec un boîtier (2) recevant des composants de capteur, un tronçon cylindrique comportant un filetage de fixation (6) disposé sur le boîtier, un élément de fixation (3) pour fixer le capteur (1) à un emplacement d'utilisation et un moyen d'aide à l'alignement pour le capteur (1), **caractérisé en ce que** le moyen d'aide à l'alignement présente deux contre-écrous bombés (4, 5) qui sont montés sur le filetage de fixation (6) et présente une rondelle de compensation (8), celle-ci et l'élément de fixation étant montés avec du jeu sur le tronçon cylindrique entre les contre-écrous (4, 5), par le fait que l'élément de fixation et la rondelle de compensation présentent respectivement un trou débouchant circulaire (7, 9) dont le diamètre est chaque fois plus grand que le diamètre extérieur du tronçon cylindrique, chaque contre-écrou (4, 5) présentant une surface extérieure (4a, 5a) à courbure convexe, les segments courbes des surfaces extérieures (4a, 5a) des contre-écrous (4, 5) étant tournées vers l'élément de fixation et la rondelle de compensation (8) et en contact avec ceux-ci, et au moins un contre-écrou (4) présente un filetage intérieur en prise avec le filetage de fixation (6), que la rondelle de compensation (8) forme une partie librement mobile par rapport à l'élément de fixation, et qu'une position d'inclinaison du tronçon cylindrique par rapport à l'élément de fixation est réglable simultanément dans deux directions de l'espace et peut être fixée par serrage des contre-écrous (4, 5) contre l'élément de fixation et la rondelle de compensation (8).

2. Capteur selon la revendication 1, **caractérisé en ce que** les surfaces extérieures courbes (4a, 5a) présentent un rayon de courbure défini et forment une surface sphérique ou une asphère.

3. Capteur selon la revendication 2, **caractérisé en ce que** la courbure de la surface extérieure (4a, 5a) de chaque contre-écrou (4, 5) est constante sur toute sa périphérie.

4. Capteur selon l'une des revendications 1 à 3, **caractérisé en ce qu'**un contre-écrou (4) est solidarisé avec le tronçon cylindrique.

5. Capteur selon l'une des revendications 1 à 3, **caractérisé en ce que** les deux contre-écrous (4, 5) présentent un filetage intérieur en prise avec le filetage de fixation (6).

6. Capteur selon l'une des revendications 1 à 5, **caractérisé en ce que** les trous débouchants (7, 9) sont limités par des segments de l'élément de fixation ou de la rondelle de compensation (8) situés chaque fois dans un plan, lesquels sont en contact serré l'un avec l'autre lors de la fixation au tronçon cylindrique.

7. Capteur selon la revendication 6, **caractérisé en ce que** la plage angulaire dans laquelle le réglage d'inclinaison du tronçon cylindrique est réalisable peut être définie par le dimensionnement du contre-écrou (4), l'épaisseur de l'élément de fixation et de la rondelle de compensation (8) et la taille de son trou débouchant (7).

8. Capteur selon l'une des revendications 1 à 7, **caractérisé en ce que** son boîtier (2) présente la forme d'une douille ronde cylindrique, cette douille ronde formant le tronçon cylindrique sur lequel le filetage de fixation (6) est disposé.

9. Capteur selon l'une des revendications 1 à 7, **caractérisé en ce que** celui-ci présente un boîtier (2) cubique sur lequel est fixé un boulon fileté (10) qui forme le tronçon cylindrique.

10. Capteur selon l'une des revendications 1 à 9, **caractérisé en ce que** le capteur (1) est un capteur optique, un capteur inductif ou un capteur à ultrasons.
